# EUROPEAN PATENT SPECIFICATION

(11) **EP 4 192 911 B1**
(45) Date of publication and mention of the grant of the patent: **08.05.2024**
(21) Application number: 21762375.0
(22) Date of filing: 05.08.2021
(51) Int. Cl.: C08L 7/00, B60C 1/00, C08K 3/04, C08L 9/00

(54) **RUBBER COMPOSITION FOR TYRES WITH LOW ROLLING RESISTANCE AND GOOD WINTER PROPERTIES**
KAUTSCHUKZUSAMMENSETZUNG FÜR REIFEN MIT NIEDRIGEM ROLLWIDERSTAND UND GUTEN WINTEREIGENSCHAFTEN
COMPOSITION DE CAOUTCHOUC POUR PNEUMATIQUE AYANT UNE BASSE RÉSISTANCE AU ROULEMENT ET DES BONNES CARACTÉRISTIQUES HIVERNALES

(30) Priority: 07.08.2020 LU 101973
(43) Date of publication of application: 14.06.2023
(73) Proprietor: Apollo Tyres Global R&D B.V., 7521 PT Enschede (NL)
(72) Inventor: MONDAL, Anup, 7521 PT Enschede (NL); REUVEKAMP, Louis, 7521 PT Enschede (NL); MOHAMED, Tharik, 7521 PT Enschede (NL)
(74) Representative: Michalski Hüttermann & Partner Patentanwälte mbB
(86) International application number: PCT/EP2021/071934
(87) International publication number: WO 2022/029263

(56) References cited:
- EP-A1- 2 607 098
- EP-A1- 2 998 351
- US-A- 5 307 850
- US-A1- 2010 065 173
- US-B1- 6 956 093

## Description

The present invention relates to a cross-linkable rubber composition, a cross-linked rubber composition obtained by cross-linking such a rubber composition, a method of preparing a tyre and a tyre.

Tread rubber is one of the important portions of a pneumatic tyre which contributes enormously to the overall performance of a tyre. A tyre has to perform well in severe weather conditions and it has to exhibit a variety of performances such as wet grip and low rolling resistance.

A tread compound can be optimized to exhibit good winter performance by using different kinds of polymers but increasing one performance usually leads to a decrease in another performance.

On the one hand, improving rolling resistance of carbon black-filled rubber compounds for tyre tread cap typically normally results in a compromise in the wet grip. On the other hand, maintaining wet grip and snow performance at the same level is challenging when improving the rolling resistance. For example, it is known that reducing the amount of carbon black in the rubber compound would typically improve the rolling resistance but compromise the wet grip. Good rolling resistance compounds for tyre tread cap are achieved using carbon black-based rubber compounds. However, these compounds do not exhibit good wet grip performance.

JP 2017008151 A discloses a rubber composition by blending 100 pts. mass of a diene rubber containing a natural rubber of 30 to 95 pts. mass and syndiotactic-1,2-polybutadiene of 5 pts. mass or more, 30 to 90 pts. mass of carbon black having nitrogen absorption specific surface area of 30 to 180 m2/g and a sulfide compound such as 2,2'-bis(benzimidazolyl-2)ethyl disulfide (2EBZ) of 0.1 to 20 mass% based on the carbon black.

US 10131772 B2 discloses a rubber composition for a base tread, including: a rubber component and a reinforcing agent, the rubber component including natural rubber, a butadiene rubber containing 1,2-syndiotactic polybutadiene crystals, a butadiene rubber synthesized in the presence of a rare earth catalyst, and a modified butadiene rubber having a cis content of not more than 50% by mass.

JP4231265 B2 discloses a pneumatic tire with a tread wherein the tread rubber is composed in a two-layer structure comprising a cap and a base. The base is composed of a rubber composition having a dynamic elasticity modulus E' lower than that of the cap at room temperature, and the dynamic elasticity modulus E' higher than that of the cap at 80°C.

WO2009/050944 A1 discloses a rubber composition for treads, which contains 0.5-10 parts by mass of an alkylphenol-sulfur chloride condensate (B) represented by a formula (B1), 0.5-6 parts by mass of sulfur (C) and 10-100 parts by mass of silica (D) per 100 parts by mass of a specific rubber component (A), for attaining both low heat generation property and adequate breaking strength. Also disclosed is a tire having a tread which uses such a rubber composition for treads.

Optimizing the tread compound for rolling resistance normally results in trade-off in winter performance. The present invention has the object to at least partially overcome the drawbacks and in particular to provide a composition for a tyre tread which has improved rolling resistance and snow performance, without compromising on wet grip and durability.

This object is achieved by a cross-linkable rubber composition according to claim 1, a cross-linked rubber composition according to claim 8, a method according to claim 13 and a tyre according to claim 14. Advantageous embodiments are the subject of dependent claims. They may be combined freely unless the context clearly indicates otherwise.

Hence, a cross-linkable rubber composition, the cross-linkable rubber composition comprising, per hundred parts by weight of rubber (phr):
≥ 91 to ≤ 99 phr of natural rubber or isoprene rubber or combination thereof,
a syndiotactic 1, 2 polybutadiene, and
≥ 1 to ≤ 100 phr of a filler comprising carbon black,
wherein the syndiotactic 1, 2 polybutadiene is present in an amount of ≥ 1 phr to ≤ 9 phr and wherein the ratio of the syndiotactic 1, 2 polybutadiene to the carbon black is in the range of ≥ 1:8 to ≤ 1:3.

It has surprisingly been found that such a rubber composition provides improvement in the rolling resistance and snow performance while still maintaining the wet grip and durability. The composition can perform well for an all season tread with a balanced property of rolling resistance, snow and wet grip.

It will be understood that in formulations discussed in connection with the present invention the phr amount of all rubber components adds up to 100. Further it is to be understood that the ratio of the syndiotactic 1, 2- polybutadiene to the carbon black refers to the ratio of compounds given in phr amounts (parts by weight per 100 parts by weight of rubber).

The ratio in parts by weight per 100 parts by weight of rubber of the syndiotactic 1, 2-polybutadiene to carbon black may be the range of ≥ 1:7.5 to ≤ 1:4.

The syndiotactic 1,2 polybutadiene may be present in an amount in a range of ≥ 3 phr to ≤ 5 phr. The syndiotactic 1,2-polybutadiene may have a melting point in a range of 100°C to 130°C. A polymer melting point may be determined, for example, from differential scanning calorimetry (DSC) curves. The syndiotactic-1,2-polybutadiene may have at least 70 percent, preferably at least 90 percent, of its repeating units in a 1,2-configuration, namely a syndiotactic 1,2-configuration. In embodiments, the syndiotactic 1, 2 polybutadiene contains at least 90 percent of its repeating units in a 1,2-configuration and has a melting point of between 100°C to 130°C. The syndiotactic 1,2 polybutadiene may be selected from AT 400 or AT300 available from JSR.

The filler comprises at least a carbon black. In embodiments, the filler is a carbon black having a tint strength in the range of 126% to 136% (determined by ASTM D3265) and an iodine adsorption number in the range of 134g/kg to 150g/kg (determined by ASTM D1510) or the filler comprises a carbon black having a tint strength in the range of 126% to 136% (determined by ASTM D3265) and an iodine adsorption number in the range of 134g/kg to 150g/kg (determined by ASTM D1510). The term tint strength as used herein refers to its efficiency in decreasing reflectance when mixed with a white pigment. Tint strength generally increases with decreasing primary particle size and decreases with aggregate structure complexity. The term iodine adsorption number as used herein refers to a measure of the amount of iodine which can be adsorbed on the surface of a given mass of carbon black. The iodine adsorption number depends on the surface porosity and is thus in proportion to the surface area of carbon black.

In another embodiment, the filler is a blend of a first and a second carbon black or the filler comprises a blend of a first and a second carbon black. The first and second carbon black preferably differ in tint strength and iodine adsorption number. The first carbon black preferably has a higher tint strength and a higher iodine adsorption number compared to the second carbon black. The first carbon black preferably is present in a higher amount compared to the second carbon black. The first carbon black preferably is a carbon black having a tint strength in the range of 126% to 136% (determined by ASTM D3265) and an iodine adsorption number in the range of 134g/kg to 150g/kg (determined by ASTM D1510) as described above. In embodiments, the second carbon black has a tint strength in the range of 101% to 116% (determined by ASTM D3265) and an iodine adsorption number in the range of 80g/kg to 95g/kg (determined by ASTM D1510). The second carbon black can be selected from N339, N330, N375, N326, or any carbon black classified as being in the N300 series.

In embodiments, the filler may comprise a carbon black and silica or a blend of a first and a second carbon black and silica. In embodiments, the filler further comprises silica in an amount of ≥1 phr to ≤ 15 phr.

In a preferred embodiment, the filler comprises silica in an amount of ≥ 1 phr to ≤ 15 phr and the total amount of the filler is in a range of ≥ 20 phr to ≤ 100 phr. The total amount of the filler as used herein refers to the amount of carbon black or carbon blacks blend or a combination of carbon black or carbon blacks and silica.

The cross-linkable rubber compositions may be sulfur-vulcanizable and/or peroxide-vulcanizable. If desired, additives can be added. Examples of usual additives are stabilizers, antioxidants, lubricants, fillers, dyes, pigments, flame retardants, conductive fibres and reinforcing fibres.

Another aspect of the present invention is a cross-linked rubber composition that is obtained by cross-linking a rubber composition according to the invention.

In an embodiment of the cross-linked rubber composition, the G'0.56 (storage modulus) at 100 °C (determined by RPA strain sweep measurements according to ISO 6502) ranges from ≥ 0.30 MPa to ≤ 0.40 MPa.

In another embodiment the cross-linked rubber composition has a rebound value at 70°C (as per ISO 4662) ranging from ≥ 60 % to ≤ 67%.

In another embodiment the cross-linked rubber composition has a tan delta value at 70°C (as per DMA double shear -80°C to 25°C at 0.1%) ranging from ≥ 0.09 to ≤ 0.16.

In another embodiment the cross-linked rubber composition has a tear strength (as per delft 20' at 160°C) ranging from ≥ 16 MPa to ≤ 20 MPa.

The present invention also relates to a method of preparing a tyre, comprising the steps of:
- providing a tyre assembly comprising a rubber composition according to the invention;
- cross-linking at least the rubber composition according to the invention in the tyre assembly.

The present invention also encompasses a tyre for a light truck, bus or truck comprising a tread, wherein the tread comprises a cross-linked rubber composition according to the invention.

The present invention will be further described with reference to the following examples without wishing to be limited by them.

### Methods:

Tensile strength: Tensile strength analysis was performed for cured samples on a Zwick Z005 apparatus with a speed of 500 mm/min speed. Samples were cured at 160°C for 20 minutes and standard tensile specimens were cut from rubber sheet according to ISO 37 standard. Measuring tensile strength and force elongation properties via tensile method also determines modulus at various elongations i.e. 25%, 100%, 200% & 300% which indicates static stiffness.

Rebound: Rebound measurements were performed for cured samples on a Zwick/Roell 5109 Rebound Resilience Tester according to the standardized ISO4662 method at 23°C and 70°C.

RPA Payne effect: The storage shear moduli (G') of rubber compounds was evaluated by using Alpha Rubber Process Analyzer (RPA 2000) (Alpha Technologies, Akron, USA) under the temperature of 100 °C, frequency of 0.5 Hz and varying strains in the range of 0.28-100%. The Payne effect was calculated from different storage shear moduli at low strain (0.56%) and high strain (100%).

Temperature sweep by DMA: Dynamic mechanical analysis (DMA) analysis was performed for cured samples by Metravib DMA+450 in double shear mode. DMA was performed by temperature sweep at constant frequency 10 Hz with 6 % strain in a temperature range of 25°C to 80°C. DMA was also performed by temperature sweep at constant frequency 10 Hz with 1 % strain in a temperature range of -80°C to 25°C.

### Example 1

In accordance with the preceding, cross-linkable rubber compositions were prepared according to the following table 1. In a first step, the rubber components were added and mixed, followed by a second step wherein the fillers, oil and additives were added and mixed and a last step wherein the curing package was added. Composition Ref1 is a comparative example and composition E1 is the composition according to the invention. Amounts for the components are given in PHR. Unless stated otherwise, glass transition temperatures given were determined by DSC according to ISO 22768.

**Table 1: Composition of Examples:**

| Component | Ref1 (phr) | E1 (phr) |
|---|---|---|
| NR | 100 | 95 |
| Syndiotactic 1,2-polybutadiene | | 5 |
| Carbon black | 48 | 36.2 |
| Silica | 8 | 8 |
| Oil | 2 | 2 |

Natural rubber (NR) was TSR 20, with a Mooney Viscosity 80 and a Tg of -70 °C. Syndiotactic 1,2-polybutadiene rubber was AT 400 supplied by JSR corporation.

Carbon black for the reference composition was N220 supplied by Columbian Carbon and for the composition E1 of the present invention was N134 supplied by Orion Engineered Carbons.

Silica was supplied by PPG
Oil was RAE processing oil supplied by Repsol.

Rebound at 70°C and Tan delta (70°C) were measured to check (relate) for rolling resistance (RR) of the compounds. G' (storage modulus) at -20°C was measured for indication of snow performance and Tan delta (0°C) was measured to check wet grip. Payne effect was measured using a rubber process analyzer to evaluate rolling resistance (RR). The following table 2 shows the results obtained from the cured compositions.

**Table 2: Test results:**

| **Component** | | **Ref1** | **E1** |
|---|---|---|---|
| Rebound (70°C) | [%] | 54.00 | 64.00 |
| Tan δ 70 °C (RR indicator) | | 0.25 | 0.14 |
| Tan δ 0 °C (Wet grip indicator) | | 0.12 | 0.12 |
| Elongation at break | % | 560.23 | 549.78 |
| M300% | MPa | 9.79 | 9.74 |
| Tensile strength | MPa | 23.12 | 23.02 |
| Tear strength (delft) 20' at 160°C | MPa | 15.41 | 17.62 |
| G' (-20°C) | MPa | 15.48 | 6.08 |
| G' 100.02 (100 °C) | MPa | 0.05 | 0.07 |
| G'0.56 (100°C) | MPa | 0.54 | 0.34 |

The results show for the composition E1 an increase of rebound at 70°C from 54.00 to 64.00 and a decrease in Tan delta at 70°C from 0.25 to 0.14. Rebound testing at 70°C (ISO 4662) is believed to be an indicator for rolling resistance (RR). A higher rebound value at 70°C relates to a lower rolling resistance for a tyre whose tread comprises such a cured rubber. In a similar fashion, a lower tan δ at 70 °C is an indicator for improved rolling resistance.

Tan delta at 0°C did not change and was measured as 0.12 for both the compositions. This was an indicator that the wet grip of the compound did not change. Further it can be seen for the elongation at break, modulas at 300%, tensile strength and tear strength (delft) 20' at 160°C that remain unchanged which shows that the durability was same.

Further, the results show for the composition E1 a decrease of G' at -20 °C from 15.48 to 6.08 which is an indicator of better snow performance. The results also show for the composition E1 the Payne value decreasing from 0.54 to 0.34, which also is an indicator for better rolling resistance.

In summary, this shows a surprising improvement of the rolling resistance indicators and the snow performance while maintaining the wet grip and durability. Without being bound to a specific theory, it is believed that the replacement of carbon black with syndiotactic polybutadiene led to this change.

These results illustrate an improvement in the rolling resistance and snow performance of the tyres due to the rubber composition of the invention.

## Claims

1. A cross-linkable rubber composition, the cross-linkable rubber composition comprising, per hundred parts by weight of rubber (phr):
≥ 91 phr to ≤ 99 phr of natural rubber or isoprene rubber or a combination thereof, a syndiotactic 1, 2 polybutadiene, and
≥ 1 phr to ≤ 100 phr of a filler comprising carbon black,
**characterized in that**
the syndiotactic 1, 2 polybutadiene is present in an amount of ≥ 1 phr to ≤ 9 phr and **in that** the ratio of the syndiotactic 1, 2 polybutadiene to the carbon black is in the range of ≥ 1:8 to ≤ 1:3.

2. The rubber composition according to claim 1, wherein the syndiotactic 1, 2 polybutadiene contains at least 90 percent of its repeating units in a 1,2-configuration and has a melting point of between 100°C to 130°C.

3. The rubber composition according to any one of claims 1 or 2, wherein the filler comprises or is a carbon black having a tint strength in the range of 126% to 136% (determined by ASTM D3265) and an iodine adsorption number in the range of 134g/kg to 150g/kg (determined by ASTM D1510)

4. The rubber composition according to any one of claims 1 to 3, wherein the filler is or comprises a blend of a first and a second carbon black.

5. The rubber composition according to claim 4 wherein the second carbon black has a tint strength in the range of 101% to 116% (determined by ASTM D3265) and an iodine adsorption number in the range of 80g/kg to 95g/kg (determined by ASTM D1510).

6. The rubber composition according to any of the claims 1 to 5, wherein the filler further comprises silica in an amount of ≥1 phr to ≤15 phr.

7. The rubber composition according to claim 6, wherein the total amount of the filler is in a range of ≥20 phr to ≤ 100 phr.

8. A cross-linked rubber composition, **characterized in that** it is obtained by cross-linking a rubber composition according to one of claims 1 to 7.

9. The cross-linked rubber composition according to claim 8 with a G'0.56 at 100°C (measured by RPA strain sweep ISO 6502) ranging from ≥ 0.30 MPa to ≤ 0.40 MPa.

10. The cross-linked rubber composition according to claim 8 or 9 with a rebound value at 70°C (as per ISO 4662) ranging from ≥ 60 % to ≤ 67%.

11. The cross-linked rubber composition according to claims 8 to 10 with a tan delta value at 70°C (as per DMA double shear -80°C to 25°C at 0.1%) ranging from ≥ 0.09 to ≤ 0.16.

12. The cross-linked rubber composition according to claims 8 to 11 with a tear strength (as per delft 20' at 160°C) ranging from ≥ 16 MPa to ≤ 20 MPa.

13. A method of preparing a tyre, comprising the steps of:
- providing a tyre assembly comprising a cross-linkable rubber composition according to one of claims 1 to 7; and
- cross-linking at least the cross-linkable rubber composition according to one of claims 1 to 7 in the tyre assembly.

14. A tyre for a light truck, bus or truck comprising a tread , **characterized in that** the tread comprises a cross-linked rubber composition according to one of claims 8 to 12.

## Patentansprüche

1. Vernetzbare Kautschukzusammensetzung, wobei die vernetzbare Kautschukzusammensetzung pro hundert Gewichtsteile Kautschuk (phr) umfasst:
≥ 91 phr bis ≤ 99 phr Naturkautschuk oder Isoprenkautschuk oder eine Kombination davon,
ein syndiotaktisches 1,2-Polybutadien, und
≥ 1 phr bis ≤ 100 phr eines Füllstoffs enthaltend Industrieruß,
**dadurch gekennzeichnet, dass**
das syndiotaktische 1,2-Polybutadien in einer Menge von ≥ 1 phr bis ≤ 9 phr vorhanden ist und dass das Verhältnis des syndiotaktischen 1,2-Polybutadiens zu dem Industrieruß im Bereich von ≥ 1:8 bis ≤ 1:3 liegt.

2. Kautschukzusammensetzung nach Anspruch 1, wobei das syndiotaktische 1,2-Polybutadien mindestens 90 Prozent seiner sich wiederholenden Einheiten in einer 1,2-Konfiguration enthält und einen Schmelzpunkt zwischen 100°C und 130°C aufweist.

3. Kautschukzusammensetzung nach einem der Ansprüche 1 oder 2, wobei der Füllstoff einen Industrieruß mit einer Farbstärke im Bereich von 126% bis 136% (bestimmt nach ASTM D3265) und einer Iod-Adsorptionszahl im Bereich von 134 g/kg bis 150 g/kg (bestimmt nach ASTM D1510) umfasst oder ein solcher ist.

4. Kautschukzusammensetzung nach einem der Ansprüche 1 bis 3, wobei der Füllstoff eine Mischung aus einem ersten und einem zweiten Industrieruß ist oder aus einer solchen besteht.

5. Kautschukzusammensetzung nach Anspruch 4, wobei der zweite Industrieruß eine Farbstärke im Bereich von 101% bis 116% (bestimmt nach ASTM D3265) und eine Iod-Adsorptionszahl im Bereich von 80 g/kg bis 95 g/kg (bestimmt nach ASTM D1510) aufweist.

6. Kautschukzusammensetzung nach einem der Ansprüche 1 bis 5, wobei der Füllstoff ferner Kieselsäure in einer Menge von ≥ 1 phr bis ≤15 phr umfasst.

7. Kautschukzusammensetzung nach Anspruch 6, wobei die Gesamtmenge des Füllstoffs in einem Bereich von ≥ 20 phr bis ≤ 100 phr liegt.

8. Vernetzte Kautschukzusammensetzung, **dadurch gekennzeichnet, dass** sie durch Vernetzen einer Kautschukzusammensetzung nach einem der Ansprüche 1 bis 7 erhalten ist.

9. Vernetzte Kautschukzusammensetzung nach Anspruch 8 mit einem G'0,56 bei 100 °C (gemessen durch RPA-Dehnungs-Sweep gemäß ISO 6502) im Bereich von ≥ 0,30 MPa bis ≤ 0,40 MPa.

10. Vernetzte Kautschukzusammensetzung nach Anspruch 8 oder 9 mit einem Rückprallwert bei 70 °C (gemäß ISO 4662) im Bereich von ≥ 60 % bis ≤ 67 %.

11. Vernetzte Kautschukzusammensetzung nach den Ansprüchen 8 bis 10 mit einem tan delta-Wert bei 70 °C (gemäß DMA Doppelscherung -80 °C bis 25 °C bei 0,1%) im Bereich von ≥ 0,09 bis ≤ 0,16.

12. Vernetzte Kautschukzusammensetzung nach den Ansprüchen 8 bis 11 mit einer Reißfestigkeit (nach delft 20' bei 160 °C) im Bereich von ≥ 16 MPa bis ≤ 20 MPa.

13. Verfahren zur Herstellung eines Reifens, umfassend die folgenden Schritte:
- Bereitstellen einer Reifenanordnung, die eine vernetzbare Kautschukzusammensetzun nach einem der Ansprüche 1 bis 7 umfasst; und
- Vernetzen mindestens der vernetzbaren Kautschukzusammensetzung nach einem der Ansprüche 1 bis 7 in der Reifenanordnung.

14. Reifen für einen Leichtlastkraftwagen, Bus oder Lastkraftwagen mit einer Reifenlauffläche, **dadurch gekennzeichnet, dass** die Reifenlauffläche eine vernetzte Kautschukzusammensetzung nach einem der Ansprüche 8 bis 12 umfasst.

## Revendications

1. Composition de caoutchouc réticulable, la composition de caoutchouc réticulable comprenant, par cent parties en poids de caoutchouc (phr) :
≥ 91 phr à ≤ 99 phr de caoutchouc naturel ou de caoutchouc d'isoprène ou d'une combinaison correspondante,
un 1,2-polybutadiène syndiotactique, et
≥ 1 phr à ≤ 100 phr d'une charge comprenant du noir de carbone,
**caractérisée en ce que**
le 1,2-polybutadiène syndiotactique est présent en une quantité de ≥ 1 phr à ≤ 9 phr et **en ce que** le rapport du 1,2-polybutadiène syndiotactique sur le noir de carbone et dans la plage de ≥ 1 : 8 à ≤ 1 : 3.

2. Composition de caoutchouc selon la revendication 1, le 1,2-polybutadiène syndiotactique contenant au moins 90 pour cent de ses motifs répétitifs dans une configuration 1,2 et ayant un point de fusion compris entre 100 °C et 130 °C.

3. Composition de caoutchouc selon l'une quelconque des revendications 1 ou 2, la charge comprenant ou étant un noir de carbone ayant un pouvoir colorant dans la plage de 126 % à 136 % (déterminé par la norme ASTM D3265) et un indice d'adsorption d'iode dans la plage de 134 g/kg à 150 g/kg (déterminé par la norme ASTM D1510).

4. Composition de caoutchouc selon l'une quelconque des revendications 1 à 3, la charge étant ou comprenant un mélange d'un premier et d'un deuxième noir de carbone.

5. Composition de caoutchouc selon la revendication 4, le deuxième noir de carbone ayant un pouvoir colorant dans la plage de 101 % à 116 % (déterminé par la norme ASTM D3265) et un indice d'adsorption d'iode dans la plage de 80 g/kg à 95 g/kg (déterminé par la norme ASTM D1510).

6. Composition de caoutchouc selon l'une quelconque des revendications 1 à 5, la charge comprenant en outre une silice en une quantité de ≥ 1 phr à ≤ 15 phr.

7. Composition de caoutchouc selon la revendication 6, la quantité totale de la charge étant dans une plage de ≥ 20 phr à ≤ 100 phr.

8. Composition de caoutchouc réticulé, **caractérisée en ce qu'**elle est obtenue par réticulation d'une composition de caoutchouc selon l'une des revendications 1 à 7.

9. Composition de caoutchouc réticulé selon la revendication 8 dotée d'un G'0,56 à 100 °C (mesuré par balayage de déformation RPA selon la norme ISO 6502) dans la plage de ≥ 0,30 MPa à ≤ 0,40 MPa.

10. Composition de caoutchouc réticulé selon la revendication 8 ou 9 dotée d'une valeur de rebond à 70 °C (selon la norme ISO 4662) dans la plage de ≥ 60 % à ≤ 67 %.

11. Composition de caoutchouc réticulé selon les revendications 8 à 10 dotée d'une valeur de tan delta à 70 °C (selon un cisaillement double DMA -80 °C à 25 °C à 0,1 %) dans la plage de ≥ 0,09 à ≤ 0, 16.

12. Composition de caoutchouc réticulé selon les revendications 8 à 11 dotée d'une résistance à la déchirure (selon delft 20' à 160 °C) dans la plage de ≥ 16 MPa à ≤ 20 MPa.

13. Procédé de préparation d'un pneu, comprenant les étapes de :
- fourniture d'un ensemble pneumatique comprenant une composition de caoutchouc réticulable selon l'une des revendications 1 à 7 ; et
- réticulation d'au moins la composition de caoutchouc réticulable selon l'une des revendications 1 à 7 dans l'ensemble pneumatique.

14. Pneu pour une camionnette, un bus ou un camion comprenant une bande de roulement, **caractérisé en ce que** la bande de roulement comprend une composition de caoutchouc réticulé selon l'une des revendications 8 à 12.
